# EUROPEAN PATENT APPLICATION

(11) **EP 1 544 929 A1**
(43) Date of publication of application: **22.06.2005**
(21) Application number: 03730565.3
(22) Date of filing: 22.05.2003
(51) Int. Cl.: H01M 4/50, H01M 4/06

(54) **ACTIVE SUBSTANCE OF POSITIVE ELECTRODE FOR BATTERY, PROCESS FOR PRODUCING THE SAME AND BATTERY THEREFROM**

(30) Priority: 26.09.2002 JP 2002280139
(71) Applicant: Mitsui Mining & Smelting Co., Ltd., Tokyo 141-8584 (JP)
(72) Inventor: Yamaguchi, M. Mitsui Mining & Smelting Co., Ltd., Takehara-shi, Hiroshima 725-00 (JP); Kumada, Naoki Mitsui Mining & Smelting Co., Ltd., Takehara-shi, Hiroshima 725-0025 (JP); NAGAISHI, Tsuyoshi Mitsui Mining Smelting Co.,Ltd, Takehara-shi, Hiroshima 725-0025 (JP); Ochi, Yasuhiro Mitsui Mining & Smelting Co., Ltd., Takehara-shi, Hiroshima 725-0025 (JP); ASANUMA, Takeshi c/o MITSUI MINING & SMELTING CO., Takehara-shi, Hiroshima 725-0025 (JP); NUMATA, Koichi c/o MITSUI MINING & SMELTING CO.,, Takehara-shi, Hiroshima 725-0025 (JP); HIRAYAMA, Shigeo c/o MITSUI MINING & SMELTING CO, Takehara-shi, Hiroshima 725-0025 (JP)
(74) Representative: Strehl Schübel-Hopf & Partner
(86) International application number: PCT/JP2003/006377
(87) International publication number: WO 2004/030124

(57) **Abstract**

A positive electrode active material for a battery, consisting essentially of manganese dioxide, contains 5 to 400 ppm of magnesium or 0.001 to 3.0% by weight of titanium, thereby achieving even higher performance of a battery, such as enhanced pulse characteristics.

## Description

### Technical Field

This invention relates to a positive electrode active material for a battery, the positive electrode active material consisting essentially of manganese dioxide; a method for producing the positive electrode active material; and a battery using the positive electrode active material.

### Background Art

As a positive electrode active material for a battery, such as a manganese battery, an alkaline-manganese battery, or a lithium battery, manganese dioxide has been hitherto used as a typical substance. Manganese dioxide, which is used for such a positive electrode active material for a battery, is produced by electrolyzing an electrolytic solution containing manganese sulfate and sulfuric acid to cause precipitation. Various improvements have been made to achieve high performance of manganese dioxide.

Japanese Patent Application Laid-Open No. 1990-57693, for example, describes that manganese dioxide having a higher specific surface area than before can be produced by electrolyzing an electrolytic solution containing manganese sulfate, sulfuric acid and phosphoric acid.

Japanese Patent Application Laid-Open No. 1993-21062, for example, describes that an electrolytic solution containing manganese sulfate, sulfuric acid and an ammonium salt is electrolyzed to obtain α type manganese dioxide having ammonia, then the α type manganese dioxide is neutralized with an aqueous solution of a lithium salt, or is mixed with a lithium salt, and used as a positive electrode active material for a lithium secondary battery, whereby the discharge capacity of the battery can be increased.

Japanese Patent No. 3065630, for example, describes that manganese dioxide obtained by electrolysis or the like is reduced with a hydrazine compound, immersed in an aqueous solution of a lithium salt, and used as a positive electrode active material for a lithium secondary battery, whereby the reproducibility of the charge/discharge cycle of the battery can be improved.

United States Patent No. 5342712, for example, describes that an anatase titanium oxide and graphite are mixed with manganese dioxide by a mechanical mixer, and the mixture is used as a positive electrode active material for a battery, whereby the life of the battery can be increased.

### Disclosure of the Invention

With the foregoing batteries, higher performance, such as enhanced pulse characteristics, is desired. In the above-mentioned positive electrode active material, therefore, it is desired to make the specific surface area as large as possible, thereby forming a further increased reaction area.

Under these circumstances, the present invention has as an object the provision of a positive electrode active material for a battery having as large a specific surface area as possible, accordingly, a further increased reaction area, thereby achieving even higher performance such as enhanced pulse characteristics; a method for producing the positive electrode active material; and a battery using the positive electrode active material.

A positive electrode active material for a battery according to a first invention is a positive electrode active material for a battery, consisting essentially of manganese dioxide, characterized by containing 5 to 400 ppm of magnesium.

A positive electrode active material for a battery according to a second invention is the first invention, characterized by having a specific surface area of 10 to 65 m²/g.

A positive electrode active material for a battery according to a third invention is the first or second invention, characterized by being a precipitate formed by electrolysis of an electrolytic solution containing manganese sulfate, sulfuric acid and magnesium sulfate.

A positive electrode active material for a battery according to a fourth invention is the third invention, characterized in that the concentration of magnesium in the electrolytic solution is 0.1 to 40 g/L.

A positive electrode active material for a battery according to a fifth invention is a positive electrode active material for a battery, consisting essentially of manganese dioxide, characterized by containing 0.001 to 3.0% by weight of titanium.

A positive electrode active material for a battery according to a sixth invention is the fifth invention, characterized by having a specific surface area of 40 to 150 m²/g.

A positive electrode active material for a battery according to a seventh invention is the fifth or sixth invention, characterized by being a precipitate formed by electrolysis of an electrolytic solution containing manganese sulfate, sulfuric acid and a titanium compound.

A positive electrode active material for a battery according to an eighth invention is any one of the third, fourth and seventh inventions, characterized by being the precipitate which has been sintered.

A method for producing a positive electrode active material for a battery according to a ninth invention is a method for producing a positive electrode active material for a battery, the positive electrode active material consisting essentially of manganese dioxide, the method characterized by electrolyzing an electrolytic solution containing manganese sulfate, sulfuric acid and magnesium sulfate to form a precipitate.

A method for producing a positive electrode active material for a battery according to a tenth invention is the ninth invention, characterized in that the concentration of magnesium in the positive electrode active material for a battery is 5 to 400 ppm.

A method for producing a positive electrode active material for a battery according to an eleventh invention is the ninth or tenth invention, characterized in that the specific surface area of the positive electrode active material is 10 to 65 m²/g.

A method for producing a positive electrode active material for a battery according to a twelfth invention is any one of the ninth to eleventh inventions, characterized in that the concentration of magnesium in the electrolytic solution is 0.1 to 40 g/L.

A method for producing a positive electrode active material for a battery according to a thirteenth invention is a method for producing a positive electrode active material for a battery, the positive electrode active material consisting essentially of manganese dioxide, the method characterized by electrolyzing an electrolytic solution containing manganese sulfate, sulfuric acid and a titanium compound to form a precipitate.

A method for producing a positive electrode active material for a battery according to a fourteenth invention is the thirteenth invention, characterized in that the titanium compound is at least one titanium compound selected from the group consisting of titanium sulfate, titanium nitrate and titanium chloride.

A method for producing a positive electrode active material for a battery according to a fifteenth invention is the thirteenth or fourteenth invention, characterized in that the concentration of titanium in the positive electrode active material for a battery is 0.001 to 3.0% by weight.

A method for producing a positive electrode active material for a battery according to a sixteenth invention is any one of the thirteenth to fifteenth inventions, characterized in that the specific surface area of the positive electrode active material for a battery is 40 to 150 m²/g.

A method for producing a positive electrode active material for a battery according to a seventeenth invention is any one of the ninth to sixteenth inventions, characterized in that the precipitate formed is sintered.

A battery according to an eighteenth invention is characterized by using the positive electrode active material for a battery according to any one of the first to eighth inventions.

### Brief Description of the Drawings

FIG. 1 is a sectional view of an embodiment of a lithium primary battery according to the present invention.
FIG. 2 is a sectional view of an embodiment of an alkaline-manganese battery according to the present invention.
FIG. 3 is a graph showing the results of measurements of X-ray diffractions of a test sample B2 and a control sample B3 before sintering.

### Best Mode for Carrying Out the Invention

Embodiments of a positive electrode active material for a battery according to the present invention, a method for producing the positive electrode active material, and a battery using the positive electrode active material will now be described below, but the present invention is not limited to the following embodiments.

### [First Embodiment: Containing magnesium]

A positive electrode active material for a battery according to the present invention is a positive electrode active material for a battery, which consists essentially of manganese dioxide and contains magnesium.

Concretely, the positive electrode active material for a battery according to the present invention is electrolytic manganese dioxide produced by the electrolytic decomposition process, and contains magnesium at a time when it is produced by electrolysis. That is, magnesium is not added to the electrolytically produced manganese dioxide after production, but magnesium is contained integrally within manganese dioxide at the time of electrolytic production. More concretely, it is assumed that the electrolytic manganese dioxide is manganese dioxide incorporating magnesium in a state where the removal of magnesium cannot be confirmed, for example, even if washed with diluted sulfuric acid; namely, it is manganese dioxide with magnesium contained integrally as a solid solution.

In such positive electrode active material for a battery, it is preferred for the content of magnesium to be 5 to 400 ppm. This is because if the content of magnesium is less than 5 ppm, pulse characteristics, etc. cannot be improved markedly. If the content of magnesium is higher than 400 ppm, pulse characteristics, etc. will decline.

It is preferred for the positive electrode active material for a battery to have a specific surface area of 10 to 65 m²/g. If the specific surface area is smaller than 10 m²/g, pulse characteristics, etc. cannot be improved markedly. If the specific surface area is larger than 65 m²/g, the amount of gas generated is large.

The above-described positive electrode active material for a battery can be obtained by electrolyzing an electrolytic solution containing manganese sulfate, sulfuric acid and magnesium sulfate to form a precipitate. By this measure, manganese dioxide containing magnesium integrally within it can be easily produced.

It is preferred for the concentration of magnesium in the electrolytic solution to be 0.1 to 40 g/L. This is because if the concentration of magnesium in the electrolytic solution is outside the above range, it becomes difficult to bring the amount of magnesium, which is contained integrally in manganese dioxide, into the range of 5 to 400 ppm.

Other conditions for electrolysis may be general conditions which have been applied heretofore. Concretely, it is advisable, for example, to set the manganese concentration in the electrolytic solution at 20 to 50 g/L, set the sulfuric acid concentration in the electrolytic solution at 30 to 80 g/L, use titanium or the like for the anode, use carbon or the like for the cathode, set the liquid temperature at 90 to 100°C, and set the current density at 50 to 100 A/m². The method of adding magnesium sulfate into the electrolytic solution for purposes of replenishment is not restricted, if magnesium sulfate is dissolved in the electrolytic solution by the method used. An example of the method is to add magnesium sulfate in a form dissolved in a solution of manganese sulfate supplied into the electrolytic solution for replenishment.

The precipitate obtained in the above manner is sintered for dehydration, whereby a positive electrode active material preferred for use in a lithium battery can be produced. The sintering conditions are not restricted and, if the precipitate is heat-treated for 1 to 5 hours at a temperature of 300 to 470°C, for example, it can be formed into a positive electrode active material preferred for a lithium battery.

The positive electrode active material for a battery, which has been produced as described above, has a magnesium concentration of 5 to 400 ppm and a specific surface area of 10 to 65 m²/g. Thus, a battery using this positive electrode active material for a battery can show high performance, such as enhanced pulse characteristics.

An alkaline-manganese battery using the positive electrode active material for a battery, for example, can improve pulse characteristics, etc. by 3 to 10%, as compared with an alkaline-manganese battery using manganese dioxide, which does not contain magnesium in a concentration of 5 to 400 ppm, as a positive electrode active material for a battery. Thus, an alkaline-manganese battery using the present positive electrode active material for a battery can be used preferably in a digital camera, etc. A lithium battery using the positive electrode active material for a battery can improve pulse characteristics, etc. at a low temperature by 5 to 10%, as compared with a lithium battery using manganese dioxide, which does not contain magnesium in a concentration of 5 to 400 ppm, as a positive electrode active material for a battery. Thus, such a lithium battery can be used preferably even if used under conditions bringing about a low-temperature environment, such as a cold district. Moreover, such a lithium battery using the positive electrode active material for a battery can improve pulse characteristics, etc. at a high temperature by 10 to 20%, as compared with a lithium battery using manganese dioxide, which does not contain magnesium in a concentration of 5 to 400 ppm, as a positive electrode active material for a battery. Thus, such a lithium battery can be used preferably even if used under conditions bringing about a high-temperature environment, such as vehicle assembly conditions.

A negative electrode active material for use in the above battery is not restricted, and may be a general one which has been applied heretofore. In the case of a manganese battery or an alkaline-manganese battery, for example, zinc, etc. can be used. In the case of a lithium battery, lithium, etc. can be used. The electrolytic solution for use in the battery is not restricted, and may be a general one which has been applied heretofore. In the case of a manganese battery, for example, zinc chloride, ammonium chloride, etc. can be used. In the case of an alkaline-manganese battery, potassium hydroxide, etc. can be used. In the case of a lithium battery, an organic solvent solution of a lithium salt, etc. can be used.

### [Second Embodiment: Containing titanium]

A positive electrode active material for a battery according to the present invention is a positive electrode active material for a battery, which consists essentially of manganese dioxide and contains titanium.

Concretely, the positive electrode active material for a battery according to the present invention is electrolytic manganese dioxide produced by the electrolytic decomposition process, and contains titanium at a time when it is produced by electrolysis. That is, titanium is not added to the electrolytically produced manganese dioxide after production, but titanium is contained integrally within manganese dioxide at the time of electrolytic production. More concretely, it is assumed that the electrolytic manganese dioxide is manganese dioxide incorporating titanium in a state where peaks of titanium cannot be detected even when X-ray diffraction is measured; namely, it is manganese dioxide with titanium contained integrally as a solid solution. Hence, manganese dioxide as the positive electrode active material for a battery according to the present invention is clearly different in the results of measurement of X-ray diffraction and completely different in structure from manganese dioxide which contains titanium (titanium oxide) added after electrolytic production, although details will be offered later.

In such positive electrode active material for a battery, it is preferred for the content of titanium to be 0.001 to 3.0% by weight. This is because if the content of titanium is less than 0.001% by weight, the specific surface area cannot be improved markedly. If the content of titanium is higher than 3.0% by weight, the specific surface area will decrease.

It is preferred for the positive electrode active material for a battery to have a specific surface area of 40 to 150 m²/g. This is because if the specific surface area is smaller than 40 m²/g, pulse characteristics, etc. cannot be improvedmarkedly. If the specific surface area is larger than 150 m²/g, the amount of gas generated is large.

The above-described positive electrode active material for a battery can be obtained by electrolyzing an electrolytic solution containing manganese sulfate, sulfuric acid and a titanium compound to form a precipitate. By this measure, manganese dioxide containing titanium integrally within it can be easily produced. Examples of the titanium compounds are titanium sulfate, titanium nitrate and titanium chloride. The amount of the titanium compound in the electrolytic solution is adjusted so that the content of titanium in the precipitate will be 0.001 to 3.0% by weight.

Other conditions for electrolysis may be general conditions which have been applied heretofore, as explained earlier. The method of adding the titanium compound into the electrolytic solution for replenishment is not restricted, if the titanium compound is dissolved in the electrolytic solution by the method used. An example of the method is to add the titanium compound in a form dissolved in a solution of manganese sulfate supplied into the electrolytic solution for replenishment.

The precipitate obtained in the above manner is sintered for dehydration, whereby a positive electrode active material preferred, particularly, for use in a lithium battery can be produced. The sintering conditions are not restricted and, if the precipitate is heat-treated for 1 to 5 hours at a temperature of 350 to 470°C, for example, it canbe formed into a positive electrode active material preferred for a lithium battery.

The positive electrode active material for a battery, which has been produced as described above, has a titanium content of 0.001 to 3.0% by weight and a specific surface area of 40 to 150 m²/g. Thus, a battery using the positive electrode active material for a battery can show high performance, such as enhanced pulse characteristics.

An alkaline-manganese battery using the positive electrode active material for a battery, for example, can improve pulse characteristics, etc. by 10 to 20%, as compared with an alkaline-manganese battery using manganese dioxide, which does not contain titanium, as a positive electrode active material for a battery. Thus, such an alkaline-manganese battery can be used preferably in a digital camera, etc. A lithium battery using the positive electrode active material for a battery can improve pulse characteristics, etc. at a low temperature by 10 to 25%, as compared with a lithium battery using manganese dioxide, which does not contain titanium, as a positive electrode active material for a battery. Thus, such a lithium battery can be used preferably even in a cold district or the like. Moreover, such a lithium battery using the positive electrode active material for a battery can improve pulse characteristics, etc. at a high temperature by 5 to 15%, as compared with a lithium battery using manganese dioxide, which does not contain titanium, as a positive electrode active material for a battery. Thus, such a lithium battery can be used preferably even if used under conditions bringing about a high-temperature environment, such as vehicle assembly conditions.

A negative electrode active material for use in the above battery is not restricted, and may be a general one which has been applied heretofore. In the case of a manganese battery or an alkaline-manganese battery, for example, zinc, etc. can be used. In the case of a lithium battery, lithium, etc. can be used. The electrolytic solution for use in the battery is not restricted, and may be a general one which has been applied heretofore. In the case of a manganese battery, for example, zinc chloride, ammonium chloride, etc. can be used. In the case of an alkaline-manganese battery, potassium hydroxide, etc. can be used. In the case of a lithium battery, an organic solvent solution of a lithium salt, etc. can be used.

### [Another embodiment: Containing magnesium and titanium]

In the aforementioned embodiments, examples containing magnesium or titanium have been explained. However, it is possible to contain both magnesium and titanium.

### Examples

Examples implemented in order to confirm the effects of the positive electrode active material for a battery according to the present invention, a method for producing the positive electrode active material, and a battery using the positive electrode active material will be described below, but the present invention is not limited to these Examples.

### [First Example: Containing magnesium]

### <Preparation of test samples and control samples>

For a beaker (5 liters), a heating device was provided, anodes (titanium plates) and cathodes (graphite plates) were suspended alternately, and an introduction pipe for an electrolytic replenishing solution (manganese sulfate) was provided at the bottom of the beaker to constitute an electrolytic cell.

The above electrolytic replenishing solution was poured into the electrolytic cell to adjust an electrolytic solution in the electrolytic cell such that the electrolytic solution would have the composition shown in Table 1 below. With the electrolytic solution being maintained at a temperature of 90°C, electrolysis was performed for 20 days at a current density of 35 A/m². Then, the anodes were taken out of the electrolytic cell, and electrodeposited precipitates were post-treated in accordance with the customary method to prepare test samples A1 to A5 and control samples A1 to A4.

Then, the test samples A1 to A5 and the control samples A1 to A4 were sintered in an electric furnace for 3 hours at the temperatures shown in Table 1.

**{Table 1}**

| | | Composition of electrolytic solution (g/L) | | | Sintering temperature (°C) |
|---|---|---|---|---|---|
| | | Manganese | Sulfuric acid | Magnesium sulfate | |
| Test sample | A1 | 40 | 75 | 0.1 | 400 |
| | A2 | Ditto | Ditto | 20 | 400 |
| | A3 | Ditto | Ditto | 40 | 400 |
| | A4 | Ditto | Ditto | 20 | 300 |
| | A5 | Ditto | Ditto | 20 | 470 |
| Control sample | A1 | Ditto | Ditto | 0.01 | 400 |
| | A2 | Ditto | Ditto | 60 | 400 |
| | A3 | Ditto | Ditto | 20 | 250 |
| | A4 | Ditto | Ditto | 20 | 500 |

### <Experiment A1: Measurement of magnesium content and specific surface area>

The above test samples A1 to A5 and the control samples A1 to A4 were measured for the magnesium content and specific surface area before sintering and the specific surface area after sintering. The magnesium content was determined by general ICP emission spectrochemical analysis. The specific surface area was determined by heat-treating the sample in a nitrogen stream (250°C×20 min) to remove moisture in the pores, and then applying the BET 1-point process to the sample. The results are shown in Table 2 below.

**{Table 2}**

| | | Magnesium content (ppm) | Specific surface area (m²/g) | |
|---|---|---|---|---|
| | | | Before sintering | After sintering |
| Test sample | A1 | 5 | 40 | 30 |
| | A2 | 200 | 45 | 30 |
| | A3 | 400 | 50 | 30 |
| | A4 | 200 | 70 | 65 |
| | A5 | 200 | 20 | 10 |
| Control sample | A1 | 1 | 40 | 30 |
| | A2 | 600 | 50 | 30 |
| | A3 | 200 | 90 | 70 |
| | A4 | 200 | 5 | 5 |

As seen from Table 2, the test samples A1 to A5 (concentration of magnesium sulfate during electrolysis: 0.1 to 40 g/L, sintering temperature: 300 to 470°C) showed a magnesium content of 5 to 400 ppm, and a specific surface area of 10 to 65 m²/g. On the other hand, the control samples A1 to A4 (concentration of magnesium sulfate during electrolysis: less than 0.1 g/L or more than 40 g/L, sintering temperature: lower than 300°C or higher than 470°C) had at least one of a magnesium content and a specific surface area falling outside the above-mentioned ranges of the test samples A1 to A5.

### <Preparation of alkaline-manganese batteries>

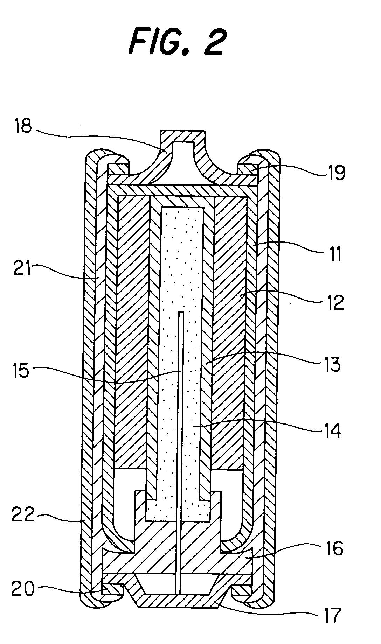

Alkaline-manganese batteries (model "LR6" (AA batteries)), which used the test samples A1 to A5 and the control samples A1 to A4 before sintering as positive electrode active materials, were prepared. Zinc oxide was mixed to saturation with an aqueous solution of potassium hydroxide (concentration 40%), and a gelling agent (a mixture of carboxymethylcellulose and sodium polyacrylate) was added (in an amount of the order of 1.0%) to the mixture. The resulting mixture was used as an electrolytic solution of the batteries. A zinc powder was used as a negative electrode active material. This negative electrode active material (3.0 g) and the above electrolytic solution (1.5 g) were mixed, and gelled. The resulting gelled mixture was used as a negative electrode material. A longitudinal sectional view of the thus prepared alkaline-manganese battery is shown in FIG. 2.

As shown in FIG. 2, analkaline-manganesebattery according to the present invention is furnished with a positive electrode active material 12, which is placed on the inside of a positive electrode can 11 and comprises electrolytic manganese dioxide, and a negative electrode material 14 which is placed on the inside of the positive electrode active material 12 via a separator 13 and comprises a gelled zinc powder. A negative electrode current collector 15 is inserted into the negative electrode material 14, and the negative electrode current collector 15 pierces through an opening sealer 16, which seals a lower portion of the positive electrode can 11, and is bonded to a negative electrode bottom plate 17 provided below the opening sealer 16. A cap 18, which serves as a positive electrode terminal, is provided above the positive electrode can 11. Insulation rings 19 and 20, which hold the cap 18 and the negative electrode bottom plate 17 from above and from below, are provided, and the cap 18 and the negative electrode bottom plate 17 are fixed via these insulation rings 19 and 20. A heat shrinkable resin tube 21 is provided so as to cover the outer periphery of the positive electrode can 11, and an exterior can 22 covering the heat shrinkable resin tube 21 is provided.

### <Preparation of lithium primary batteries>

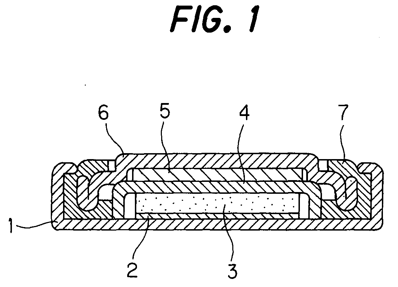

Lithium primary batteries (model "CR2032" (coin type)), which used the test samples A1 to A5 and the control samples A1 to A4 after sintering as positive electrode active materials, were prepared. A solution containing a mixture of equal amounts of propylene carbonate and 1,2-dimethoxyethane and also containing lithium perchlorate dissolved at a concentration of 1 mol/L was used as an electrolytic solution of the batteries. Metallic lithium was used as a negative electrode active material. A longitudinal sectional view of the thus prepared lithium primary battery is shown in FIG. 1.

In the lithium primary battery according to the present invention, as shown in FIG. 1, a current collector 2 made of stainless steel is spot welded to the inside of a positive electrode case 1 resistant to an organic electrolytic solution and similarly made of stainless steel, and a positive electrode active material 3 comprising electrolytic manganese dioxide is pressure bonded to the upper surface of the current collector 2. A separator 4 of polypropylene resin impregnated with the above-mentioned electrolytic solution of the battery is placed on the upper surface of the positive electrode active material 3. At an opening of the positive electrode case 1, an opening sealing plate 6 having a negative electrode 5 (comprising metallic lithium) bonded to the underside thereof is placed, with a polypropylene gasket 7 being sandwiched between the positive electrode case 1 and the opening sealing plate 6, whereby the battery is sealed. The diameter of the battery is 20 mm, and its maximum overall height is 3.2 mm.

### <Experiment A2: Measurement of pulse characteristics>

The alkaline-manganese batteries, which used the test samples A1 to A5 and the control samples A1 to A5 before sintering as positive electrode active materials, were measured for pulse characteristics at ordinary temperature (20°C), and the lithium primary batteries, which used the test samples A1 to A5 and the control samples A1 to A4 after sintering as positive electrode active materials, were measured for pulse characteristics at a low temperature (-20°C) and a high temperature (60°C).

Concretely, the pulse characteristics of the alkaline-manganese batteries were evaluated by performing pulse repetition discharges (ON for 10 seconds and OFF for 50 seconds) at a discharge current of 1,000 mA in an environment of 20°C, measuring the number of pulses until a cutoff voltage (final voltage) of 1.0 V, and calculating relative values with respect to the value of the alkaline-manganese battery, which used the control sample A1 before sintering, set at 100%. On the other hand, the pulse characteristics of the lithium primary batteries were evaluated by performing pulse repetition discharges (ON for 15 seconds and OFF for 45 seconds) at a discharge current of 10 mA in an environment of -20°C or 60°C, measuring the number of pulses until a cutoff voltage (final voltage) of 2.0 V, and calculating relative values with respect to the value of the lithium primary battery, which used the control sample A1 after sintering, set at 100%. The results are shown in Table 3.

**{Table 3}**

| | | Pulse characteristics (%) | | |
|---|---|---|---|---|
| | | Alkaline-manganese battery | Lithium primary battery | |
| | | 20°C | -20°C | 60°C |
| Test sample | A1 | 105 | 110 | 110 |
| | A2 | 105 | 110 | 115 |
| | A3 | 105 | 110 | 120 |
| | A4 | 110 | 115 | 110 |
| | A5 | 105 | 105 | 120 |
| Control sample | A1 | 100 | 100 | 100 |
| | A2 | 95 | 95 | 90 |
| | A3 | 102 | 105 | 80 |
| | A4 | 90 | 60 | 100 |

As seen from Table 3, the alkaline-manganese batteries using the test samples A1 to A5 were found to show an improvement of 5 to 10% in the pulse characteristics, as compared with the alkaline-manganese battery using the control sample A1 with a low magnesium content (1 ppm) ; and the lithium primary batteries using the test samples A1 to A5 were found to show an improvement of 5 to 15% in the pulse characteristics at a low temperature and an improvement of 10 to 20% in the pulse characteristics at a high temperature, as compared with the lithium primary battery using the control sample A1 with a low magnesium content (1 ppm). The lithium primary battery using the control sample A2 with a high magnesium content (600 ppm) was found to show further decreases in the pulse characteristics at both of a high temperature and a low temperature, as compared with the lithium primary battery using the control sample A1. Furthermore, the lithium primary batteries using the test samples A1 to A5 were found to show marked improvements in the pulse characteristics at a high temperature, as compared with the lithium primary battery using the control sample A3 with too large a specific surface area (70 m²/g), and were found to show marked improvements in the pulse characteristics at a low temperature, as compared with the lithium primary battery using the control sample A4 with a small specific surface area (5 m²/g).

### [.Second Example: Containing titanium]

### <Preparation of test samples and control samples>

Using the same electrolytic cell as in the aforementioned First Example, an electrolytic replenishing solution (manganese sulfate and 30% by weight of titanium sulfate) was poured into the electrolytic cell to adjust an electrolytic solution in the electrolytic cell such that the electrolytic solution would have the composition shown in Table 4 below. With the electrolytic solution being maintained at a temperature of 95 to 98°C, electrolysis was performed for 20 days at the current density shown in Table 4. Then, the anodes were taken out of the electrolytic cell, and electrodeposited precipitates were post-treated in accordance with the customary method to prepare test samples B1 to B3 and control samples B1 to B5.

In the control sample B3, however, titanium oxide was mixed with the precipitate after electrolysis.

Then, the test samples B1 to B3 and the control samples B1 to B5 were sintered in an electric furnace (400°Cx4 hours).

**{Table 4}**

| | | Composition of electrolytic solution | | | Current density (A/m²) |
|---|---|---|---|---|---|
| | | Manganese (g/L) | Sulfuric acid (g/L) | Titanium sulfate (mL/day) | |
| Test sample | B1 | 50 | 30 | 0.5 | 100 |
| | B2 | Ditto | Ditto | 5 | 100 |
| | B3 | Ditto | Ditto | 10 | 100 |
| Control sample | B1 | Ditto | Ditto | 0 | 100 |
| | B2 | Ditto | Ditto | 0 | 200 |
| | B3 | Ditto | Ditto | 0 | 100 |
| | B4 | Ditto | Ditto | 15 | 100 |
| | B5 | Ditto | Ditto | 5 | 200 |

### <Experiment B1: Measurement of titanium content and specific surface area>

The above test samples B1 to B3 and the control samples B1 to B5 were measured for the titanium content and specific surface area before sintering and the specific surface area after sintering. These measurements were made in the same manner as in the aforementioned First Example. The results are shown in Table 5 below.

**{Table 5}**

| | | Titanium content (wt.%) | Specific surface area (m²/g) | |
|---|---|---|---|---|
| | | | Before sintering | After sintering |
| Test sample | B1 | 0.001 | 60 | 40 |
| | B2 | 1.5 | 90 | 75 |
| | B3 | 3.0 | 150 | 100 |
| Control sample | B1 | 0 | 35 | 20 |
| | B2 | 0 | 60 | 30 |
| | B3 | 1.5 | 35 | 20 |
| | B4 | 4.5 | 60 | 30 |
| | B5 | 1.5 | 165 | 110 |

As seen from Table 5, the test samples B1 to B3 containing titanium were found to have a specific surface area, as compared with the control sample B1 free from titanium and the control sample B2 with an increased current density during electrolysis. In the test samples B1 to B3 with a titanium content of 0.001 to 3.0% by weight, moreover, as the titanium content increased, the specific surface area also increased. In the control sample B4 with too high a titanium content (4.5% by weight), on the other hand, the specific surface area was found to be even smaller than in the test samples B1 to B3.

### <Preparation of alkaline-manganese batteries>

Alkaline-manganese batteries (model "LR6" (AA batteries)), which used the test samples B1 to B3 and the control samples B1 to B5 before sintering as positive electrode active materials, were prepared in the same manner as in the aforementioned First Example.

### <Preparation of lithium primary batteries>

Lithium primary batteries (model"CR2032" (coin type)), which used the test samples B1 to B3 and the control samples B1 to B5 after sintering as positive electrode active materials, were prepared in the same manner as in the aforementioned First Example.

### <Experiment B2: Measurement of pulse characteristics>

The alkaline-manganese batteries, which used the test samples B1 to B3 and the control samples B1 to B5 before sintering as positive electrode active materials, were measured for pulse characteristics at ordinary temperature (20°C), and the lithium primary batteries, which used the test samples B1 to B3 and the control samples B1 to B5 after sintering as positive electrode active materials, were measured for pulse characteristics at a low temperature (-20°C) and a high temperature (60°C). These measurements were made in the same manner as in the aforementioned First Example. The results are shown in Table 6.

**{Table 6}**

| | | Pulse characteristics (%) | | |
|---|---|---|---|---|
| | | Alkaline-manganese battery | Lithium primary battery | |
| | | 20°C | -20°C | 60°C |
| Test sample | B1 | 110 | 115 | 105 |
| | B2 | 120 | 125 | 115 |
| | B3 | 110 | 110 | 110 |
| Control sample | B1 | 100 | 100 | 100 |
| | B2 | 101 | 102 | 95 |
| | B3 | 102 | 101 | 105 |
| | B4 | 85 | 95 | 105 |
| | B5 | 105 | 105 | 85 |

As seen from Table 6, the alkaline-manganese batteries using the test samples B1 to B3 before sintering were found to show an improvement of 10 to 20% in the pulse characteristics, as compared with the alkaline-manganese battery using the control sample B1 before sintering; and the lithium primary batteries using the test samples B1 to B3 after sintering were found to show an improvement of 10 to 25% in the pulse characteristics at a low temperature and an improvement of 5 to 15% in the pulse characteristics at a high temperature, as compared with the lithium primary battery using the control sample B1 after sintering. The lithium primary battery using the control sample B4 with a high titanium content (4.5% by weight) was found to show further decreases in the pulse characteristics, as compared with the alkaline-manganese battery and the lithium primary battery using the control sample B1 free from titanium.

Furthermore, the control sample B2 obtained by electrolysis without the addition of titanium sulfate and at an increased current density had a larger specific surface area than that of the control sample B1, but its pulse characteristics when used in the batteries were almost unchanged compared with those of the batteries using the control sample B1. On the other hand, the batteries using the test sample B1, which had nearly the same specific surface area as that of the control sample B2 and contained titanium, were found to be able to improve the pulse characteristics markedly in comparison with the batteries using the control sample B1.

Moreover, the control sample B3 having titanium simply mixed with manganese dioxide had a specific surface area almost unchanged compared with that of the control sample B1, and the batteries using the control sample B3 were also nearly unchanged in terms of the pulse characteristics as compared with the batteries using the control sample B1. By contrast, the test sample B2, which was produced so as to integrally contain the same amount of titanium as in the control sample B3 at the time of electrolytic production, had a specific surface area markedly greater than that of the control sample B1. Also, the batteries using the test sample B2 improved markedly in the pulse characteristics as compared with the batteries using the control sample B1.

In the light of these findings, the incorporation of titanium by mixing titanium oxide with manganese dioxide obtained by electrolysis, and the integral incorporation of titanium into manganese dioxide during electrolytic production by electrolyzing an electrolytic solution mixed with a titanium compound are completely different in actions and effects.

### <Experiment B3: Measurement of X-ray diffractions>

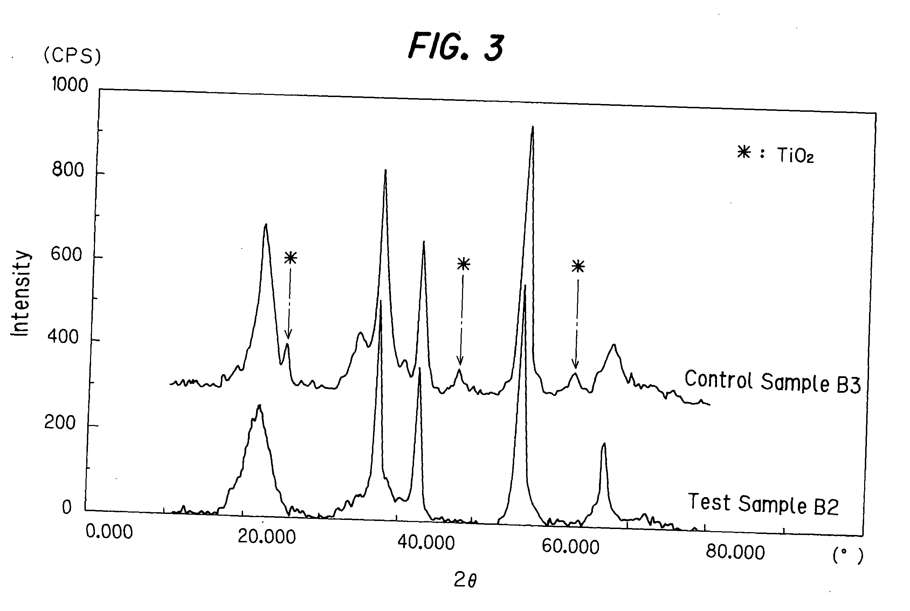

Measurements were made of the X-ray diffractions of the test sample B2 before sintering which was produced such that titanium was integrally contained in manganese dioxide during electrolytic production, and the control sample B3 before sintering which had the same amount of titanium as in the test sample B2 simply mixed with manganese dioxide. The results are shown in FIG. 3.

As shown in FIG. 3, peaks of titanium dioxide were detected in the control sample B3, thus corroborating the fact that a titanium dioxide component is incorporated in manganese dioxide while maintaining the crystal structure of titanium dioxide. In the test sample B2, on the other hand, no peaks of titanium were detected, thus assuming that a titanium component exists, in an ionic state, integrally as a solid solution in manganese dioxide.

### Industrial Applicability

According to the present invention, it is possible to provide a positive electrode active material for a battery, which has as large a specific surface area as possible, accordingly, a further increased reaction area, thereby achieving even higher performance such as enhanced pulse characteristics; a method for producing the positive electrode active material; and a battery using the positive electrode active material. Thus, the present invention can be utilized very effectively in industries.

## Claims

1. A positive electrode active material for a battery, consisting essentially of manganese dioxide,
**characterized by** containing 5 to 400 ppm of magnesium.

2. The positive electrode active material for a battery according to claim 1,
**characterized by** having a specific surface area of 10 to 65 m²/g.

3. The positive electrode active material for a battery according to claim 1 or 2,
**characterized by** being a precipitate formed by electrolysis of an electrolytic solution containing manganese sulfate, sulfuric acid and magnesium sulfate.

4. The positive electrode active material for a battery according to claim 3,
**characterized in that** a concentration of magnesium in said electrolytic solution is 0.1 to 40 g/L.

5. A positive electrode active material for a battery, consisting essentially of manganese dioxide,
**characterized by** containing 0.001 to 3.0% by weight of titanium.

6. The positive electrode active material for a battery according to claim 5,
**characterized by** having a specific surface area of 40 to 150 m²/g.

7. The positive electrode active material for a battery according to claim 5 or 6,
**characterized by** being a precipitate formed by electrolysis of an electrolytic solution containing manganese sulfate, sulfuric acid and a titanium compound.

8. The positive electrode active material for a battery according to any one of claims 3, 4 and 7,
**characterized by** being said precipitate which has been sintered.

9. A method for producing a positive electrode active material for a battery, consisting essentially of manganese dioxide,
**characterized by** electrolyzing an electrolytic solution containing manganese sulfate, sulfuric acid and magnesium sulfate to form a precipitate.

10. The method for producing a positive electrode active material for a battery according to claim 9,
**characterized in that** a concentration of magnesium in said positive electrode active material for a battery is 5 to 400 ppm.

11. The method for producing a positive electrode active material for a battery according to claim 9 or 10,
**characterized in that** a specific surface area of said positive electrode active material for a battery is 10 to 65 m²/g.

12. The method for producing a positive electrode active material for a battery according to any one of claims 9 to 11,
**characterized in that** a concentration of magnesium in said electrolytic solution is 0.1 to 40 g/L.

13. A method for producing a positive electrode active material for a battery, consisting essentially of manganese dioxide,
**characterized by** electrolyzing an electrolytic solution containing manganese sulfate, sulfuric acid and a titanium compound to form a precipitate.

14. The method for producing a positive electrode active material for a battery according to claim 13,
**characterized in that** said titanium compound is at least one titanium compound selected from the group consisting of titanium sulfate, titanium nitrate and titanium chloride.

15. The method for producing a positive electrode active material for a battery according to claim 13 or 14,
**characterized in that** a concentration of titanium in said positive electrode active material for a battery is 0.001 to 3.0% by weight.

16. The method for producing a positive electrode active material for a battery according to any one of claims 13 to 15,
**characterized in that** a specific surface area of said positive electrode active material for a battery is 40 to 150 m²/g.

17. The method for producing a positive electrode active material for a battery according to any one of claims 9 to 16,
**characterized in that** said precipitate formed is sintered.

18. A battery **characterized by** using the positive electrode active material for a battery according to any one of claims 1 to 8.
